# EUROPÄISCHE PATENTANMELDUNG

(11) **EP 4 477 516 A1**
(43) Veröffentlichungstag der Anmeldung: **18.12.2024**
(21) Anmeldenummer: 24180689.2
(22) Anmeldetag: 07.06.2024
(51) Int. Cl.: B62K 21/26

(54) **FAHRRADGRIFF**

(30) Priorität: 15.06.2023 DE 202023103318 U
(71) Anmelder: Ergon International GmbH, 56072 Koblenz (DE)
(72) Erfinder: Kolb, Julia, 56073 Koblenz (DE); Juckwer, Christine, 56073 Koblenz (DE); Eßfeld, Matthias, 56154 Boppard (DE)
(74) Vertreter: dompatent von Kreisler Selting Werner - Partnerschaft von Patent- und Rechtsanwälten mbB

(57) **Zusammenfassung**

Ein Fahrradgriff weist eine Innenhülse (80) auf, die zumindest teilweise von einem Griffelement (50) umgeben ist. An einer Außenseite (56) des Griffelements (50) ist ein Greifknauf (58) zum Greifen des Fahrradgriffs von außen vorgesehen. Der Greifknauf (58) weist einen Fingerwulst (68) auf, der zumindest von einem Teil der Finger, außer dem Daumen, beim Greifen des Greifknaufs (58) umgriffen wird.

## Beschreibung

Die Erfindung betrifft einen Fahrradgriff.

Für unterschiedliche Einsatzzwecke sind eine Vielzahl unterschiedlicher Fahrradgriffe bekannt. Beispielsweise sind Fahrradgriffe bekannt, die in montiertem Zustand im äußeren Bereich ein im Wesentlichen in Fahrtrichtung weisendes Barend aufweisen. Es ist somit möglich, den Fahrradgriff neben einer herkömmlichen Greifposition, in der der Fahrradgriff derart umgriffen wird, dass der Daumen unterhalb des Fahrradgriffs angeordnet ist, den Fahrradgriff am Barend zu greifen. Hierbei wird das Barend ebenfalls umgriffen. Durch die Veränderung der Greifposition wird die Hand um etwa 90° gedreht. Dies führt zu einer Veränderung der Belastung des Handgelenks. Die Veränderung der Belastung setzt sich auch in die Arme und in die Schulter fort. Nachteilig bei Fahrradgriffen mit Barend ist jedoch, dass das Risiko besteht mit dem Barend hängen zu bleiben. Auch wird der Winkel des Barends vom Benutzer häufig falsch eingestellt.

Ferner sind Fahrradgriffe bekannt, die an einer Oberseite des Fahrradgriffs oder auch umlaufend eine Verdickung an einem äußeren Rand der Fahrradgriffs aufweisen. Diese dient dazu, dass ein äußerer Anschlag bzw. eine Begrenzung für die Hand des Benutzers realisiert ist. Der Fahrradgriff kann somit intuitiv möglichst weit außen gegriffen werden, da im Bereich des kleinen Fingers der Benutzer die insbesondere umlaufende Erhöhung spürt und diese als Begrenzung des Greifens möglichst weit außen am Fahrradgriff bzw. am Lenker wahrnimmt.

Aufgabe der Erfindung ist es, einen Fahrradgriff mit unterschiedlichen Greifposition zu schaffen.

Die Lösung der Aufgabe erfolgt erfindungsgemäß durch einen Fahrradgriff mit den Merkmalen des Anspruchs 1.

Der erfindungsgemäße Fahrradgriff weist vorzugsweise eine Innenhülse auf, die zumindest teilweise von einem Griffelement umgeben ist. Vorzugsweise ist hierbei die Innenhülse aus härterem Material als das Griffelement hergestellt. Hierdurch ist es möglich, die Innenhülse über ein Klemmelement am Lenker zu befestigen. Hierzu kann die Innenhülse einen Klemmbereich aufweisen, der zumindest teilweise von einem Klemmelement umgeben ist. Ebenso kann die Innenhülse selbst Ansätze o.dgl. aufweisen, die zum klemmenden Befestigen der Innenhülse auf dem Fahrradlenker dienen. Hierzu ist es beispielsweise möglich, dass die Innenhülse selbst ähnlich einer Schelle ausgebildet ist und die entsprechenden Ansätze mit Hilfe einer Schraube oder einem anderen Verbindungsmittel miteinander verbunden und zum klemmenden Befestigen aufeinander zu bewegt werden. Auch ist ein Befestigen der Innenhülse auf andere Weise am Fahrradlenker, beispielsweise durch Vorsehen einer Rastverbindung zwischen Innenhülse und Fahrradlenker, durch Vorsehen einer mit der Innenhülse verbundenen, in den Fahrradlenker ragenden Innenklemmung oder beispielsweise auch durch Kleben o.dgl., möglich.

Die Innenhülse ist von dem Griffelement vorzugsweise vollständig umgeben, wobei das Griffelement insbesondere aus weicherem Kunststoffmaterial als die Innenhülse besteht. Hierbei kann das Griffelement aus unterschiedlichen Materialien, insbesondere unterschiedlich weichen Materialien, zur Ausbildung unterschiedlicher Bereiche des Griffelements hergestellt sein. Auch kann die Dicke des Griffelements in unterschiedlichen Bereichen zur Ausbildung beispielweise stärker gepolsterter Bereiche unterschiedlich sein. Die Oberfläche des Griffelements kann unterschiedliche Texturen zur Ausbildung unterschiedlicher Griffbereiche und insbesondere zum sicheren Greifen, beispielsweise auch bei Feuchtigkeit, ausgebildet sein. Gegebenenfalls kann die Innenhülse auch entfallen, so dass das Griffelement unmittelbar auf dem Fahrradlenker angeordnet wird. Dies ist insbesondere möglich, wenn das Griffelement selbst eine ausreichende Härte bzw. Stabilität aufweist. Das Fixieren erfolgt sodann beispielsweise durch ein Klemmelement, wobei es bei dieser Ausführungsform bevorzugt ist, dass die Fixierung unmittelbar auf Grund der Reibung ggf. durch Vorsehen eines zusätzlichen Haftverbinders, einer Rastverbindung o.dgl. erfolgt.

Erfindungsgemäß weist das Griffelement an einer Außenseite einen Greifknauf zum Greifen des Fahrradgriffs von außen auf. Die Außenseite des Fahrradgriffs ist die in montiertem Zustand nach außen, d.h. vom Vorbau wegweisende Seite. Die Außenseite des Fahrradgriffs ist die am Lenkerende angeordnete Seite des Fahrradgriffs. Durch das Vorsehen eines Greifknaufs ist es möglich, den Fahrradgriff in einer vollständig anderen Position zu greifen, indem anstelle eines üblichen Umgreifens des Griffelements von oben mit an der Unterseite des Griffelements angeordnetem Daumen ein Greifen des Greifknaufs von außen erfolgt. Hierbei ist der Daumen an einer Oberseite angeordnet und ragt in Richtung einer Vorderseite des Griffelements. Der Handballen ist an der Außenseite des Greifknaufs angeordnet und der Zeigefinger, der Mittelfinger, der Ringfinger und der kleine Finger umgreifen den Greifknauf in montiertem Zustand während des Fahrens an einer Unterseite und ggf. einer Vorderseite des Knaufs bzw. des Griffelements. Um ein möglichst zuverlässiges Greifen des Greifknaufs zu gewährleisten, weist der Greifknauf erfindungsgemäß eine Fingerwulst auf. Die Fingerwulst wird zumindest von einem, insbesondere mehreren der Finger mit Ausnahme des Daumens umgriffen. Die Fingerwulst wird somit insbesondere von dem Zeigefinger, dem Mittelfinger, dem Ringfinger und/oder dem kleinen Finger umgriffen. Vorzugsweise weist die Fingerwulst in montiertem Zustand des Fahrradgriffs somit nach unten und ggf. teilweise nach vorne bzw. nach vorne-unten. Bezogen auf eine Fahrtrichtung handelt es sich hierbei um eine Anordnung der Fingerwulst, die in bevorzugter Ausführungsform beginnend von einer im Wesentlichen unteren Seite des Fahrradgriffs bis in einen vorderen Bereich des Fahrradgriffs verläuft. Die Fingerwulst ist somit in Seitenansicht, d.h. in Ansicht von außen auf die Außenseite des Greifknaufs, in einem Bereich von insbesondere 45° bis 130° bezogen auf den Umfang des Fahrradgriffs angeordnet.

Durch das erfindungsgemäße Vorsehen eines Greifknaufs ist ein weitere Greifposition geschaffen. Hierbei wird das Handgelenk um ca. 90° gedreht und die Sitzposition ist aufrechter. Auch ist das Vorsehen eines Barends zum Ermöglichen dieser Greifposition nicht erforderlich.

Des Weiteren ist es zur Verbesserung des Greifens des Fahrradgriffs am Greifknauf bevorzugt, dass an einer Innenseite der Fingerwulst eine Fingermulde angeordnet ist. Die Innenseite der Fingerwulst ist hierbei diejenige in montiertem Zustand bezogen auf die Außenseite des Fahrradgriffs weiter innen in Richtung des Lenkervorbaus vorgesehene Seite. Im Bereich der Fingermulde liegen, mit Ausnahme des Daumens, zumindest ein Teil der übrigen Finger an bzw. greifen in die Fingermulde ein. Besonders bevorzugt ist es, dass mindestens zwei Finger der Hand, mit Ausnahme des Daumens, in der Fingermulde beim Umgreifen des Greifknaufs angeordnet sind.

Vorzugsweise weist eine Unterseite der Fingerwulst gegenüber einer Außenseite des Fahrradgriffs, d.h. gegenüber einer unterhalb des Fahrradgriffs in montiertem Zustand, einen Abstand von mindestens 5 mm, insbesondere mindestens 10 mm, auf. Die Fingerwulst weist somit im Wesentlichen senkrecht zur Längsachse des Fahrradgriffs eine Dicke von mindestens 5 mm, insbesondere mindestens 10 mm, auf. Bei einem Fahrradgriff mit Fingermulde besteht ein entsprechender Abstand gegenüber der Fingermulde.

Gegenüber einer in montiertem Zustand Oberseite des Fahrradgriffs weist der Greifknauf allenfalls eine geringe Verdickung auf. Dieser Bereich ist beim Greifen des sich an den Daumen anschließenden Bereich des Handballens angeordnet, so dass eine wulstartige Verdickung in diesem Bereich unangenehm wäre. Eine Verdickung in diesem Bereich ist insofern geringer als 3 mm gegenüber einer Oberseite des Fahrradgriffs.

Bei einer besonders bevorzugten Weiterbildung der Erfindung weist das Griffelement ein Handballenabstützelement auf. Das Handballenabstützelement weist in montiertem Zustand des Fahrradgriffs in Richtung des Benutzers bzw. entgegen der Fahrtrichtung. Das Handballenabstützelement dient bei üblichem Umgreifen des Fahrradgriffs, d.h. in einer Umgreifposition, in der der Daumen auf der Unterseite des Fahrradgriffs angeordnet ist, zum Abstützen des Handballens. Vorzugsweise erstreckt sich das Handballenabstützelement bis zu der Außenseite des Fahrradgriffs. Insbesondere geht das Handballenabstützelement somit in die Wulst oder einen Ansatz des Greifknaufs über. Dies hat den Vorteil, dass hierdurch für den Bereich des Handballens, der sich an den Daumen anschließt, eine großflächige Auflagefläche ausgebildet ist. Hierzu ist es besonders bevorzugt, dass der Greifknauf einen in montiertem Zustand in Richtung des Benutzers weisenden Ansatz aufweist, wobei der Ansatz Teil der Fingerwulst sein kann. Eine Oberseite dieses Ansatzes geht hierbei vorzugsweise in die Oberseite des Handballenabstützelements über. Dieser Übergang ist vorzugsweise stufenfrei, insbesondere ist die Oberseite des Ansatzes und die Oberseite des Handballenabstützelements auf derselben Höhe, so dass eine ebene Fläche ausgebildet ist.

Vorzugsweise erfolgt die Befestigung des erfindungsgemäßen Fahrradgriffs am Fahrradlenker durch ein Klemmelement, wie eine Schelle o.dgl. Ebenso wäre es möglich, den Fahrradgriff am Fahrradlenker mittels eines Rastelements, mit Hilfe einer Klebeverbindung und/oder durch entsprechende Reibung zu fixieren. Bevorzugt ist die Fixierung mit Hilfe eines insbesondere schellenartigen Klemmelements, da hierdurch auch bei Fahrradgriffen mit einem Handballenabstützelement ein Verdrehen des Fahrradgriffs auch bei größeren Belastungen vermieden ist.

Besonders bevorzugt ist das Vorsehen eines Klemmelements zum Fixieren des Fahrradgriffs am Fahrradlenker innerhalb des Greifknaufs. Das Klemmelement ist somit im Wesentlichen vom Greifknauf umgeben. Ferner ist es bevorzugt, dass das Klemmelement die Innenhülse in einem Klemmbereich zumindest teilweise umgibt.

Besonders bevorzugt ist es, dass das Klemmelement zumindest teilweise von einem Abdeckelement umgeben ist. Ein derartiges Abdeckelement ist in bevorzugter Ausführungsform mit der Innenhülse verbunden, insbesondere einstückig ausgebildet. Besonders bevorzugt ist es, dass durch die Innenhülse und das Abdeckelement ein Teil-Ringspalt ausgebildet ist, in dem das Klemmelement zumindest teilweise angeordnet werden kann. Der Teil-Ringspalt ist hierbei vorzugsweise in Richtung der Außenseite des Fahrradgriffs offen und kann von einer Abdeckung nach erfolgtet Montage verdeckt sein.

In einer besonders bevorzugten Weiterbildung der Erfindung weist das Griffelement ein Halteelement für eine Daumenmulde auf.

Das Griffelement kann einerseits in einer herkömmlichen Umgreifposition gegriffen werden, in der der Daumen unterhalb des Griffelements und die übrigen vier Finger auf der Oberseite des Griffelements angeordnet sind, wobei die vier Finger außer dem Daumen das Griffelement an der Oberseite und an der Vorderseite umgreifen. Vorzugsweise ist eine weitere Greifposition möglich, in der der Daumen nicht unter dem Griffelement, sondern entsprechend den übrigen vier Fingern auf der Oberseite und ggf. der Vorderseite des Griffelements angeordnet ist. In einer derartigen Greifposition bestünde zunächst beispielsweise beim Bremsen die Gefahr des Abrutschens. Bevorzugt ist daher in einem inneren Bereich des Griffelements ein Abstützelement für die Daumenmulde angeordnet. In der Greifposition, in der der Daumen entsprechend mit den übrigen vier Fingern an der Oberseite des Griffelements anliegt, d.h. in einer Aufgreifposition, ist das erfindungsgemäße Halteelement somit zwischen dem Zeigefinger und dem Daumen in der Daumenmulde angeordnet. Das Abstützelement stützt somit die Greifposition, so dass die Hand beispielsweise auch beim Bremsen oder Überfahren von Unebenheiten nicht vom Griff abrutscht und somit ein zuverlässiger Halt in einer anderen Greifposition gewährleistet ist.

Der innere Bereich des Griffelements ist der in montiertem Zustand nach innen, d.h. in eine Richtung des Lenkervorbaus weisende Bereich. Die inneren Bereiche der beiden Fahrradgriffe weist somit in montiertem Zustand aufeinander zu.

Auf Grund des verzugsweisen Vorsehens eines Halteelements in einem inneren Bereich des Griffelements ist es somit möglich, auf einfache Weise zumindest zwei unterschiedliche Greifpositionen zur realisieren. Einerseits ist eine Umgreifposition und andererseits eine Aufgreifposition möglich. In beiden Positionen sind beispielsweise Bremshebel und Schalthebel gut zugänglich. Auch ist das Umgreifen sehr einfach, da von der Umgreifposition in die Aufgreifposition lediglich die Lage des Daumens verändert wird. Dennoch erfolgt ein unterschiedliches Halten des Fahrradgriffs. Dies führt zur Veränderung der Belastung der Handgelenke, der Arme und auch der Schultern.

Das Halteelement ist vorzugsweise als Ansatz ausgebildet. Dieser ist vorzugsweise ähnlich einer Ausbuchtung oder eines Höckers in bevorzugter Ausführungsform ausgebildet. Des Weiteren ist es bevorzugt, dass das Halteelement einstückig mit dem Griffelement ausgebildet ist. Ferner ist es bevorzugt, dass die Außenflächen des Halteelements konvex ausgebildet sind. Insbesondere die an der Daumenmulde in der Aufgreifposition anliegende Außenfläche ist vorzugsweise konvex ausgebildet.

In besonders bevorzugter Ausführungsform ist das Halteelement derart ausgebildet, dass es gegenüber einer benachbarten Oberseite des Griffelements eine Höhe von mindestens 5 mm, insbesondere mindestens 7 mm und besonders bevorzugt mindestens 10 mm, aufweist. Die maximale Höhe des Halteelements ist vorzugsweise geringer als 15 mm. Die Breite des Halteelements ist in bevorzugter Ausführungsform im Bereich von 5 bis 15 mm. Das insbesondere als Ansatz mit gerundeten und vorzugsweise konvexen Außenseiten ausgebildete Halteelement ragt somit in der Aufgreifposition nicht oder nur geringfügig über die Oberseite der Hand des Benutzers vor. Bereits hierdurch ist ein zuverlässiges Halten der Hand in der Aufgreifposition auch beim Auftreten von Erschütterungen u.dgl. sichergestellt.

Zur weiteren Verbesserung der Ergonomie ist es bevorzugt, dass eine Innenfläche des Halteelements zu einer Oberseite des Griffelements einen Winkel im Bereich von 90° bis 120° aufweist. Die Innenfläche des Halteelements ist hierbei die in Richtung des inneren Bereichs des Griffelements weisende Seite. Die Innenflächen der Halteelemente weisen somit in montiertem Zustand der Fahrradgriffe aufeinander zu.

Die Außenfläche der Halteelemente, d.h. die der Innenfläche gegenüberliegende Fläche der Halteelemente, weist vorzugsweise zur Oberseite des Griffelements einen Winkel von 90° bis 130° auf. Besonders bevorzugt ist es, dass die Innenfläche einen kleineren Winkel zur Oberseite des Griffelements aufweist als die Außenfläche. Die Winkel werden hierbei stets zur unmittelbar benachbarten Oberseite des Griffelements gemessen. Hierbei erfolgt das Messen der Winkel vorzugsweise in einer Mittelebene des Halteelements, die derart ausgerichtet ist, dass in der Mittelebene auch die Längsachse des Fahrradgriffs liegt. Die Längsachse des Fahrradgriffs entspricht in montiertem Zustand der Längsachse des Lenkers in dem Bereich, in dem der Fahrradgriff montiert ist.

In montiertem Zustand weist das Halteelement im Wesentlichen nach oben. Hierdurch ist sichergestellt, dass in der Aufgreifposition die Daumenmulde, d.h. der Bereich zwischen Daumen und Zeigefinger, am Halteelement anliegt. Die Anlage erfolgt hierbei insbesondere an einer auf den Benutzer zu weisenden Rückfläche sowie insbesondere auch an den Innen- und Außenflächen des entsprechenden Halteelements. An der im Wesentlichen in Fahrtrichtung weisenden Vorderfläche des Halteelements erfolgt hierbei üblicherweise keine Anlage.

In einer weiteren bevorzugten Ausführungsform weist das Griffelement auf einer Innenseite des Halteelements gegenüber einer Außenseite des Halteelements eine unterschiedliche Höhe auf. Die Innenseite des Halteelements ist hierbei diejenige Seite des Griffelements, die auf der in montiertem Zustand inneren Seite, d.h. in dem nach innen in Richtung des Lenkervorbaus weisenden Seite des Halteelements, angeordnet ist. Entsprechend ist die Außenseite des Halteelements diejenige Seite des Griffelements, die auf der gegenüberliegenden, in montiertem Zustand vom Lenkervorbau wegweisenden Seite, angeordnet ist. Bevorzugt ist es insbesondere, dass die Höhe auf der Innenseite geringer ist als auf der Außenseite, mindestens 5 mm besonders bevorzugt 7 mm. Hierdurch wird die Ergonomie in der Aufgreifposition weiter verbessert. Eine unterschiedliche Höhe kann insbesondere durch unterschiedliche Dicke des Griffelements in dem entsprechenden Bereich realisiert werden. In montiertem Zustand weist somit die Oberseite des Griffelements einen unterschiedlichen Abstand zu einer Mittellinie des Griffelements bzw. zur Längsachse des Lenkers in dem entsprechenden Bereich auf.

Nachfolgend wird die Erfindung anhand einer bevorzugten Ausführungsform unter Bezugnahme auf die anliegenden Zeichnungen näher erläutert.

Es zeigen:
- Fig. 1: eine schematische Rückansicht einer ersten bevorzugten Ausführungsform des erfindungsgemäßen Fahrradgriffs,
- Fig. 2: eine schematische Ansicht eines zweiten Ausführungsform eines erfindungsgemäßen Fahrradgriffs von der Rückseite,
- Fig. 3: einen entsprechenden Fahrradgriff in Draufsicht in Richtung des Pfeils III in Fig. 2,
- Fig. 4: den in den Fign. 1 und 2 dargestellten Fahrradgriff in Vorderansicht in Richtung des Pfeils IV in Fig. 3,
- Fig. 5: eine schematische Ansicht von außen in Richtung des Pfeils V in Fig. 2., und
- Fig. 6: eine schematische perspektivische Ansicht einer besonders bevorzugte Ausführungsform einer klemmenden Befestigung des Fahrradgriffs.

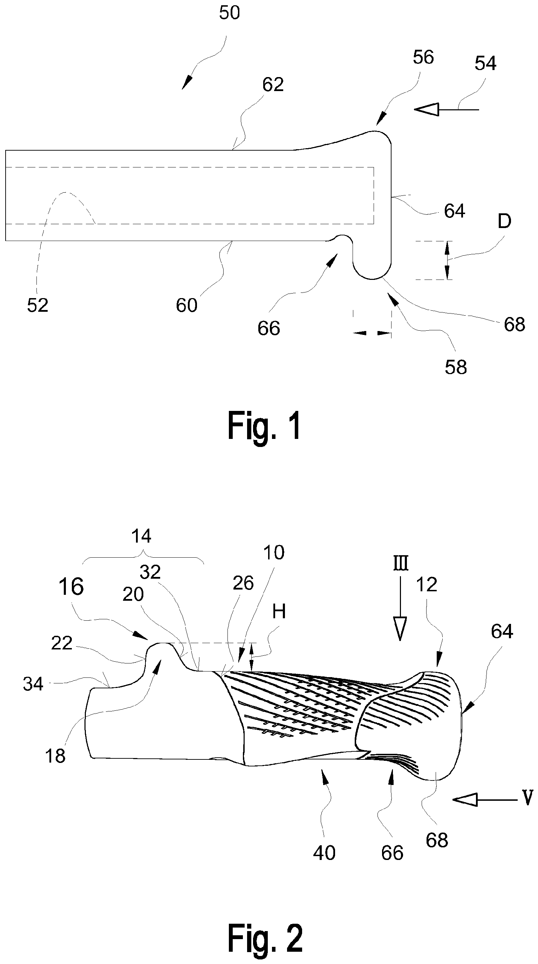

Das in Fig. 1 dargestellte erste Ausführungsbeispiel eines Fahrradgriffs weist ein Griffelement 50 auf, das ggf. unmittelbar auf das Ende eines gestrichelt dargestellten Fahrradlenkers 52 von außen in Richtung eines Pfeils 54 aufgesteckt werden kann. Zusätzlich kann in montiertem Zustand zwischen der Außenseite des Lenkers 52 und dem Griffelement 50 eine insbesondere aus härterem Material ausgebildete Innenhülse vorgesehen sein.

Erfindungsgemäß ist an einer Außenseite 56 des Griffelements 50 ein Greifknauf 58 vorgesehen. Der Greifknauf 58 ist vorzugsweise aus demselben Material wie das Griffelement 50 hergestellt und besonders bevorzugt einstückig mit diesem ausgebildet. Der Greifknauf weist insbesondere im Bereich einer Unterseite 60 des Griffelements eine Fingerwulst 62 auf. In montiertem Zustand weist die Fingerwulst, wie in Fig. 1 dargestellt, im Wesentlichen nach unten, ggf. ist nach vorne, d.h. in Fahrtrichtung weisenden Bereich, ebenfalls noch eine Fingerwulst ausgebildet bzw. die dargestellte Fingerwulst 62 ragt in diesen Bereich hinein. Die Fingerwulst dient zum Umgreifen der an der Außenfläche 64 des Greifknaufs 58 angeordneten Finger, so dass die Fingerkuppen auf einer Innenseite des Greifknaufs 58 im Bereich einer Fingermulde 66 angeordnet sind. In der Fingermulde sind insbesondere alle vier Finger mit Ausnahme des Daumens angeordnet. Gegenüber der Unterseite 60 des Griffelements kann die Fingermulde 66 derart ausgebildet sein, dass eine geringfügige Vertiefung vorgesehen ist.

Die Fingerwulst 62 weist gegenüber einer Unterseite 60 des Greifelements 50 eine Dicke bzw. Höhe D auf, die mindestens 5 mm und vorzugsweise mindestens 10 mm beträgt. Die Breite B der Fingerwulst 58 liegt im Bereich von 5 mm bis 15 mm.

Die weitere anhand der Figuren 2 bis 5 nachfolgend beschriebene bevorzugte Ausführungsform weist insbesondere einen in Fig. 1 beschriebenen Greifknauf 58 auf.

Der in den Fign. 2 bis 5 schematisch dargestellte erfindungsgemäße Fahrradgriff weist ein Griffelement 10 auf. Innerhalb des Griffelements 10 kann eine insbesondere aus härterem Material hergestellte Innenhülse vorgesehen sein. Diese kann beispielsweise in einem Außenbereich 12 des Fahrradgriffs sichtbar und von einem Klemmelement und einer Klemmschelle umgeben sein. Beispielsweise weist die Hülse hierbei einen im entsprechenden Klemmbereich vorgesehenen Schlitz auf, um ein klemmendes Fixieren der Innenhülse und somit des Fahrradgriffs am Lenker zu ermöglichen. Ebenso kann die Innenhülse auch auf andere Weise mit dem Fahrradlenker, beispielsweise durch Vorsehen einer in den Fahrradlenker eingeführten und somit innerhalb des Lenkers angeordneten Innenklemmung erfolgen. Auch ein Fixieren über Rastelemente oder durch Verkleben ist möglich. Auch kann eine Innenhülse entfallen, so dass das Griffelement des Fahrradgriffs unmittelbar auf dem Lenker beispielsweise durch Verkleben o.dgl. fixiert ist.

Das Griffelement 10 weist in einem inneren Bereich 14 ein insbesondere als Ansatz ausgebildetes Halteelement 16 auf. Der innere Bereich 14 ist derjenige Bereich des Fahrradgriffs, in montiertem Zustand in Richtung des Lenkervorbaus nach innen weist. Die beiden inneren Bereiche 14 von zwei montierten Fahrradgriffen weisen somit aufeinander zu. In Fig. 2 ist in Rückansicht, d.h. in Fahrtrichtung, ein rechter Fahrradgriff dargestellt.

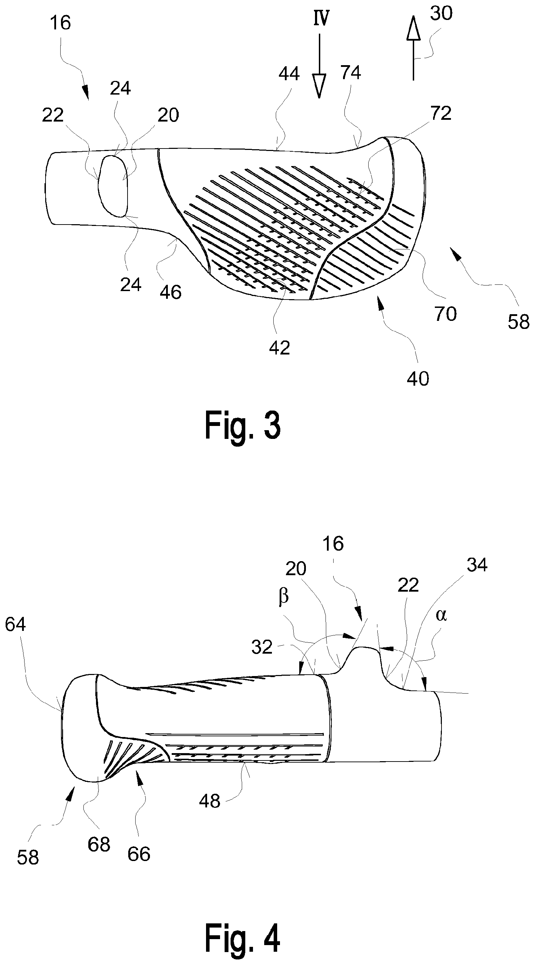

Das Halteelement 16 ist im dargestellten Ausführungsbeispiel als Ansatz ausgebildet, der konvex Außenflächen aufweist. Insbesondere eine in Richtung des Benutzers weisende Rückfläche 18, eine Außenfläche 20 sowie eine Innenfläche 22 sind konvex gekrümmt ausgebildet. Insbesondere gehen die Flächen 18, 20, 22 stufenfrei ineinander über. Vorzugsweise ist auch eine in Fahrtrichtung 30 weisende Vorderfläche 24 (Fig. 3) konvex ausgebildet und geht vorzugsweise stufenfrei in die Außenfläche 20 sowie die Innenfläche 22 über.

Gegenüber einer Oberseite 26 des Griffelements weist das Halteelement 16 eine Höhe H von 5 bis 15 mm auf. Die Oberseite 26 bildet nahe des Halteelements 16 eine Außenseite 32 und auf der gegenüberliegenden Seite eine Innenseite 34 aus. Vorzugsweise ist die Außenseite 32 in montiertem Zustand, wie in Fig. 2 dargestellt, höher als die Innenseite 34.

Des Weiteren ist es bevorzugt, dass die Innenfläche 22 gegenüber der Innenseite 34 des Fahrradgriffs einen Winkel o von 90° bis 120° aufweist (Fig. 4).

Eine Außenseite 20 des Halteelements 16 weist gegenüber einer Außenseite 32 einen Winkel β von 90° bis 130° auf.

Ferner weist der erfindungsgemäße Fahrradgriff im dargestellten Ausführungsbeispiel ein Handballenabstützelement 40 auf. Das Handballenabstützelement 40 ragt in montiertem Zustand in Richtung des Benutzers bzw. entgegen der Fahrtrichtung 30 (Fig. 3).

Der erfindungsgemäße Fahrradgriff kann insbesondere in unterschiedlichen Positionen gegriffen werden. In einer Umgreifposition ist der Handballen auf einer Oberseite 42 des Handballenabstützelements 40 angeordnet. Der Zeigefinger, der Mittelfinger, der Ringfinger und der kleine Finger umgreifen das Griffelement auf der dem Handballenabstützelement 40 gegenüberliegenden Vorderseite 44.

Der Daumen umgreift das Griffelement in Fig. 3 auf der inneren Seite neben dem Handballenabstützelement den Fahrradgriff im Bereich 46, wobei der Daumen sodann an einer Unterseite 48 des Fahrradgriffs angeordnet ist.

In der Aufgreifposition ist der Handballen weiterhin auf der Oberseite 42 des Handballenabstützelements angeordnet, rückt jedoch etwas weiter nach innen in Richtung des Halteelements 16. Der Zeigefinger, der Mittelfinger, der Ringfinger und der kleine Finger bleiben an der Vorderseite 44 des Griffelements angeordnet und rücken ebenfalls etwas weiter in Richtung des Halteelements 16. Der Daumen wird sodann auf der Innenseite 32, d.h. innerhalb des Halteelements 16, auf der Oberseite des Fahrradgriffs angeordnet. An der Rückfläche 18 des Halteelements 16 liegt der Bereich der Daumenmulde an.

Insbesondere weist das in den Figuren 1 bis 5 dargestellte Ausführungsbeispiel die anhand der Fig. 1 beschriebene erfindungsgemäße Besonderheit des Vorsehens eines Greifknaufs 58 ebenfalls auf.

In dieser Ausführungsform ist insbesondere dargestellt, dass der Greifknauf 58 in bevorzugter Ausführungsform einen Ansatz 70 (Fig. 3) aufweist, wobei der Ansatz 70 insbesondere Teil der Fingerwulst 68 ist bzw. in diese übergeht. Der Ansatz 70 geht in besonders bevorzugter Ausführungsform in das Handballenauflageelement 40 über bzw. ist einstückig mit diesem ausgebildet, so dass eine Oberseite 41 des Handballenauflageelements mit dem Ansatz 70 eine Fläche ausbildet. Dies hat den besonderen Vorteil, dass beim Greifen des Fahrradgriffs von außen am Greifknauf 58 das Daumengrundgelenk bzw. der sich an den Daumen anschließende Teil des Handballens großflächig in einem Bereich 72 abgestützt wird. Der Daumen selbst kann hierbei in einer geringfügigen Daumenmulde 74 an einer Vorderseite des Fahrradgriffs angeordnet werden, so dass der Daumen in Fahrtrichtung angeordnet ist.

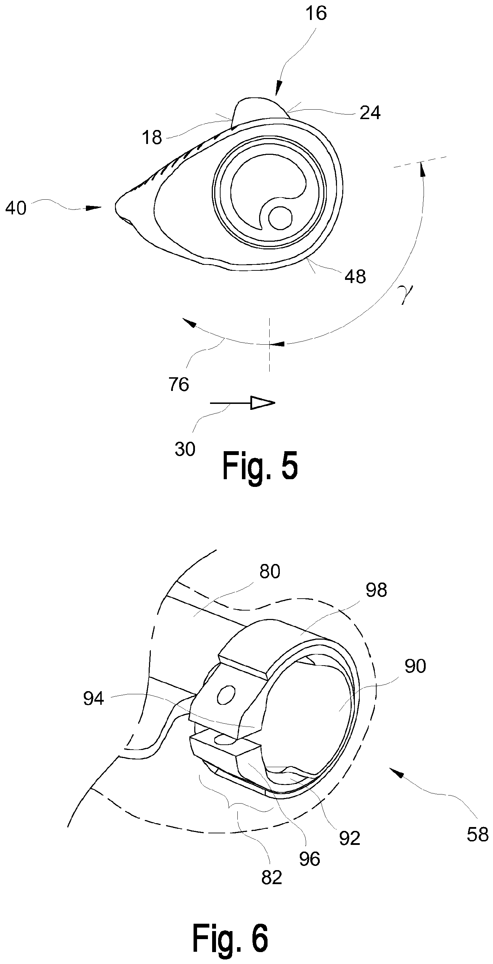

In einer Außenansicht (Fig. 5) ist zusätzlich ein Winkelbereich γ eingezeichnet. Über den gesamten Winkelbereich γ kann sich die Fingermulde 66 bzw. Fingerwulst 68 erstrecken, in der vorzugsweise Zeigefinger, Mittelfinger, Ringfinger und kleiner Finger angeordnet sind. Ausgehend von einem im Wesentlichen senkrecht nach unten weisenden Bereich erstreckt sich die Fingermulde 66 bzw. Fingerwulst 68 somit im dargestellten Ausführungsbeispiel über einen Winkel von 120° bis 130°. Ferner kann sich die Fingerwulst 68 sowie ggf. auch die Fingermulde 66 entgegen der Fahrtrichtung 30 in Richtung des Benutzers, wie durch den Pfeil 76 dargestellt, erstrecken.

In Fig. 6 ist eine besonders bevorzugte Ausführungsform einer klemmenden Befestigung des Fahrradgriffs dargestellt. Zur Verdeutlichung ist in Fig. 6 der Greifknauf 58 gestrichelt dargestellt. An einer Innenseite des Fahrradgriffs ist eine Innenhülse 80 vorgesehen, deren Innenseite auf der Außenseite des Lenkers anliegt. Die Hülse 80 erstreckt sich bis in einen äußeren Bereich, wobei die Hülse 80 in diesem Bereich 90 nicht mehr ringförmig ausgebildet ist, sondern nur noch teil-ringförmig. Im dargestellten Ausführungsbeispiel handelt es sich um einen Halbring. Dieser Bereich bildet im Wesentlichen den Klemmbereich aus und ist von einem schellenartigen Klemmelement 92 umgeben. Das Klemmelement 92 weist zwei Ansätze 94,96 auf, wobei in einem der beiden Ansätze ein Gewinde angeordnet ist, um eine klemmende Fixierung zu ermöglichen.

Die Innenhülse 80 weist ferner ein Abdeckelement 98 auf, das mit der Innenhülse 80 einstückig ausgebildet ist. Das Abdeckelement 98 umgibt in montiertem Zustand das Klemmelement 92 zumindest teilweise, so dass zwischen dem Bereich 90 der Innenhülse 80 und dem Abdeckelement 98 ein Schlitz ausgebildet ist, in dem ein Teil des Klemmelements 92 angeordnet ist.

## Patentansprüche

1. Fahrradgriff mit
einer Innenhülse (80),
einem die Innenhülse (80) zumindest teilweise umgebenden Griffelement (10,50) und
einem an einer Außenseite (56) des Griffelements (10,50) vorgesehenen Greifknauf (58) zum Umgreifen des Fahrradgriffs von außen,
wobei der Greifknauf (58) einen Fingerwulst (68) aufweist.

2. Fahrradgriff nach Anspruch 1, **dadurch gekennzeichnet, dass** der Fingerwulst (68) in montiertem Zustand zumindest teilweise nach unten weist.

3. Fahrradgriff nach Anspruch 1 oder 2, **dadurch gekennzeichnet, dass** an einer Innenseite des Fingerwulstes (68) eine Fingermulde (66) angeordnet ist.

4. Fahrradgriff nach Anspruch 2 oder 3, **dadurch gekennzeichnet, dass** eine Unterseite der Fingerwulst (68) gegenüber einer Außenseite (60) des Fahrradgriffs (50) oder der Fingermulde (66) einen Abstand von mindestens 5 mm, insbesondere mindestens 10 mm aufweist.

5. Fahrradgriff nach einem der Ansprüche 1 bis 4, **dadurch gekennzeichnet, dass** der Greifknauf (58) gegenüber einer Oberseite (62) des Fahrradgriffs (50) eine geringe Verdickung von weniger als 3 mm aufweist.

6. Fahrradgriff nach einem der Ansprüche 1 bis 5, **dadurch gekennzeichnet, dass** das Griffelement (10) ein Handballenabstützelement (40) aufweist, das in montiertem Zustand des Fahrradgriffs in Richtung des Benutzers weist und sich vorzugsweise bis zur Außenseite der Fahrradgriffs erstreckt.

7. Fahrradgriff nach Anspruch 6, **dadurch gekennzeichnet, dass** der Greifknauf (58) einen in montiertem Zustand in Richtung des Benutzers weisenden Ansatz (70) aufweist, wobei eine Oberseite des Ansatzes (70) in die Oberseite (42) des Handballenabstützelements (40) übergeht.

8. Fahrradgriff nach einem der Ansprüche 1 bis 7, **dadurch gekennzeichnet, dass** ein Klemmelement (92) zum Fixieren des Fahrradgriffs (50) am Fahrradlenker innerhalb des Griffknaufs (58) angeordnet ist.

9. Fahrradgriff nach Anspruch 8, **dadurch gekennzeichnet, dass** das Klemmelement (92) die Innenhülse (80) in einem Klemmbereich (82) zumindest teilweise umgibt.

10. Fahrradgriff nach Anspruch 8 oder 9, **dadurch gekennzeichnet, dass** ein Abdeckelement (98) das Klemmelement (92) zumindest teilweise umgibt.

11. Fahrradgriff nach Anspruch 10, **dadurch gekennzeichnet, dass** das Abdeckelement (98) mit der Innenhülse (80) verbunden, insbesondere einstückig ausgebildet, ist.

12. Fahrradgriff nach Anspruch 10 oder 11, **dadurch gekennzeichnet, dass** zwischen dem Abdeckelement (98) und der Innenhülse (80,90) ein Teil-Ringspalt zur Aufnahme eines Teils des Klemmelements (92) ausgebildet ist.

13. Fahrradgriff nach einem der Ansprüche 1 bis 12, **dadurch gekennzeichnet, dass** in einem inneren Bereich (14) des Griffelements (10) ein Halteelement (16) für die Daumenmulde vorgesehen ist.
